(19) **Europäisches Patentamt**

**European Patent Office**

**Office européen des brevets**

(11) **EP 1 659 807 A1**

(12) **EUROPEAN PATENT APPLICATION**
published in accordance with Art. 158(3) EPC

(43) Date of publication:
**24.05.2006 Bulletin 2006/21**

(51) Int Cl.:
***H04Q 7/22*** (1995.01)

(21) Application number: **03818539.3**

(22) Date of filing: **29.08.2003**

(86) International application number:
**PCT/JP2003/010995**

(87) International publication number:
**WO 2005/025254 (17.03.2005 Gazette 2005/11)**

(84) Designated Contracting States:
**DE FR GB**

(71) Applicant: **MITSUBISHI DENKI KABUSHIKI KAISHA**
**Chiyoda-ku**
**Tokyo 100-8310 (JP)**

(72) Inventors:
• **SAKO, Takumi,**
**c/o Mitsubishi Denki K.K.**
**Tokyo 100-8310 (JP)**

• **YAMABE, Yoshihiro,**
**c/o Mitsubishi Denki K.K.**
**Tokyo 100-8310 (JP)**

(74) Representative: **Sajda, Wolf E. et al**
**MEISSNER, BOLTE & PARTNER**
**Postfach 86 06 24**
**81633 München (DE)**

(54) **MOBILE STATION AND COMMUNICATION SYSTEM**

(57) A mobile station according to the present invention includes: a first measuring means (32) for measuring received power strength and propagation loss of signals transmitted from a communicating first base station; a second measuring means (32) for measuring received power strength and propagation loss of signals transmitted from a second base station neighboring the first base station; a first derivation means (34) for deriving the difference between the received power strengths from the first and second base stations, as measured by the first and second measuring means; a second derivation means (34) for deriving the difference between the propagation losses from the first and second base stations, as measured by the first and second measuring means; a comparing means (40) for comparing the values derived by the first and second derivation means (34); and a transmitting means (42) for transmitting, based on the comparison result by the comparing means (40), a handover signal to the first base station. Thereby, the mobile station that executes the handover process without fail and improves communication quality can be provided, even if a region in which upload signals can reach the communicating base station is different from another region in which download signals can be received from the communicating base station.

FIG.1

EP 1 659 807 A1

**Description**

TECHNICAL FIELD

The present invention is related to mobile stations improved in order to prevent communications disconnection at handover.

BACKGROUND ART

In Section 14.1.2.1 of the 3GPP (3rd Generation Partnership Project) specification TS25.331V3.11.0 (2002-06), the following formula (10) is described as a condition for executing a handover process. Therefore, a mobile station is configured to execute the handover process when the condition is satisfied.

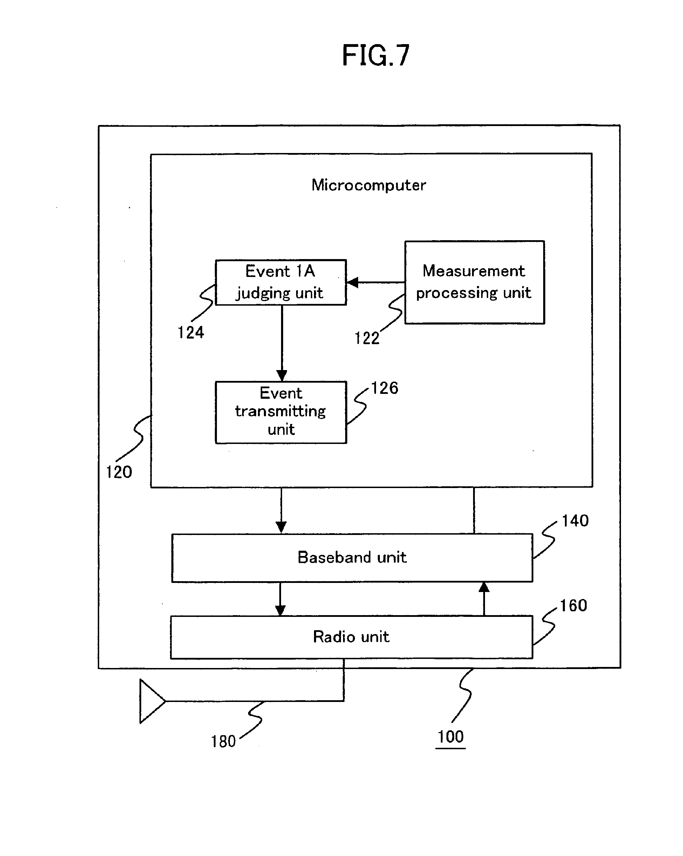

Fig. 7 is a block diagram illustrating a configuration of a mobile station. In Fig. 7, the mobile station "100" transmits signals processed by a microcomputer "120" to a base station in a communication mode through a baseband unit "140", a radio unit "160", and an antenna "180". Then, the mobile station 100 receives signals from the base station through an opposite route.

The mobile station 100 receives signals through a first common channel PCIPCH (primary common pilot channel) from another base station, in a non- communication mode (called "monitor set cell" in the 3GGP Standard), that is neighboring the base station in the communication mode (called "active set cell" in the 3GGP Standard). The received signals are inputted into the microcomputer 120 through the antenna 180, the radio unit 160, and the baseband unit 140. A measurement processing unit "122" of the microcomputer 120 periodically measures received power strengths from the neighboring base station and the base station in the communication mode, and inputs the measurement result into an event 1A judging unit "124". The event 1A judging unit 124 judges whether the Formula (10) is satisfied or not based on measurement results of the received power strengths from the base station in the communication mode and the neighboring base station. When the Formula (10) is satisfied, the mobile station outputs a signal representing an event occurrence of the handover process to the base station in the communication mode through the baseband unit 140, the radio unit 160, and the antenna 180. In addition, the measurement processing unit 122 measures received power strengths from the base station in the communication mode as well as from the neighboring base station in the non- communication mode.

$$10 \times \mathrm{LogMNew} + \mathrm{CIONew} \geq W \times 10 \times \mathrm{Log}(1/\Sigma(1/Mi))$$
$$+ (1 - W) \times 10 \times \mathrm{LogMbest}$$
$$+ (R1a - H1a/2) \qquad \ldots \mathrm{Formula}\ (10).$$

In addition, in the left side of the Formula (10), "MNew" is received power strength from the neighboring base station as the monitor set cell, which is measured by the measurement processing unit 122, and "CIONew" is a correction value of the MNew. Moreover, "0" or "1" is assigned to "W" in the right side of the Formula (10), the first term that is total received power strength "Mi" from one or plurality of base stations, as active set cells, in the communication mode or the second term that is the highest received power strength "Mbest" from the base stations is selected, and a value calculated by using the selected term is compared with the received power strength from the neighboring base station, as the monitor set cell, in the left side of the Formula (10). Moreover, "R1a" is a reporting range for defining occurrence conditions for the Event 1A, and "H1a" is correction value, referred to as a hysteresis value, of the reporting range R1a.

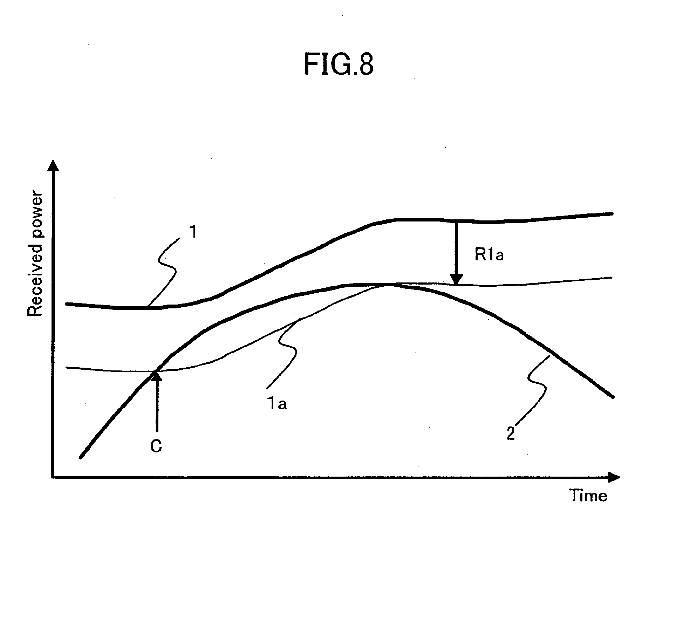

Next, the Formula (10) will be explained according to Fig. 8. In addition, in order to explain the Formula (10) simply, 0 is assigned to the W, the CIONew, and the H1a in this case. In Fig. 8, the received power strength from each of the base stations is illustrated in the vertical axis, and time is illustrated in the horizontal axis. In addition, the received power strength is increased when the position is shifted upward along the vertical axis. In Fig. 8, the value of the second term in the right side is illustrated as a curve "1", the value in which the value of the reporting range R1a is subtracted from the value of the second term, is illustrated as a curve "1a", and the value in the left side is illustrated as a curve "2". In Fig. 8, the Formula (10) is satisfied at a point "C", where the value in the left side exceeds the value in which the value of the reporting range R1a is subtracted from the value of the second term in the right side.

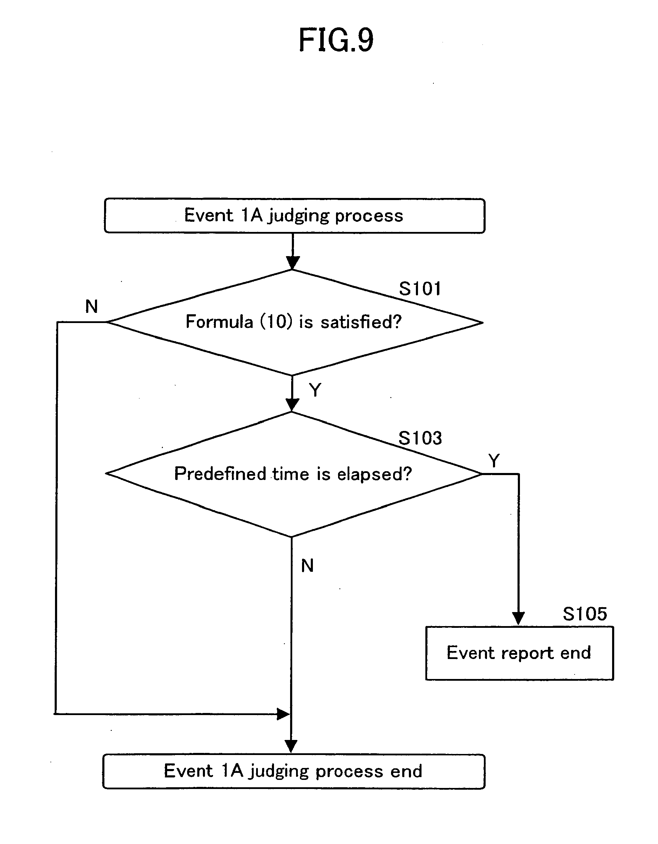

Next, the operations of the mobile station 100 are explained according to Fig. 9.

In the mobile station 100, the event 1A judging program is periodically executed. When the event 1A judging program is executed, the microcomputer 120 firstly judges whether the Formula (10) is satisfied or not (S101). By this judging, when the value in the left side is lower than the value in the right side, the event 1A judging unit 124 terminates the event 1A judging process without reporting an event occurrence to an event transmitting unit "126".

On the other hand, when the microcomputer 120 judges that the Formula (10) has been satisfied, and if a predefined time has passed after the judgment (S103), the event 1A judging process is terminated after reporting the event occurrence to the event transmitting unit 126 (S105).

As described above, because soft handover process is executed in the mobile station 100 when the Formula (10) is satisfied, the handover process can be executed when the received power strength (value of the first term or the second term in the right side of the Formula (10)) from the base station as the active set cell approximately balances the received power strength (value of the first term in the left side of the Formula (10)) from the base station as the monitor set cell. In addition, even if the Formula (10) is satisfied, the event occurrence is not reported to the event transmitting unit 126 unless the predefined time has passed, because unnecessary information must not be reported to the base station when the Formula (10) is instantaneously satisfied.

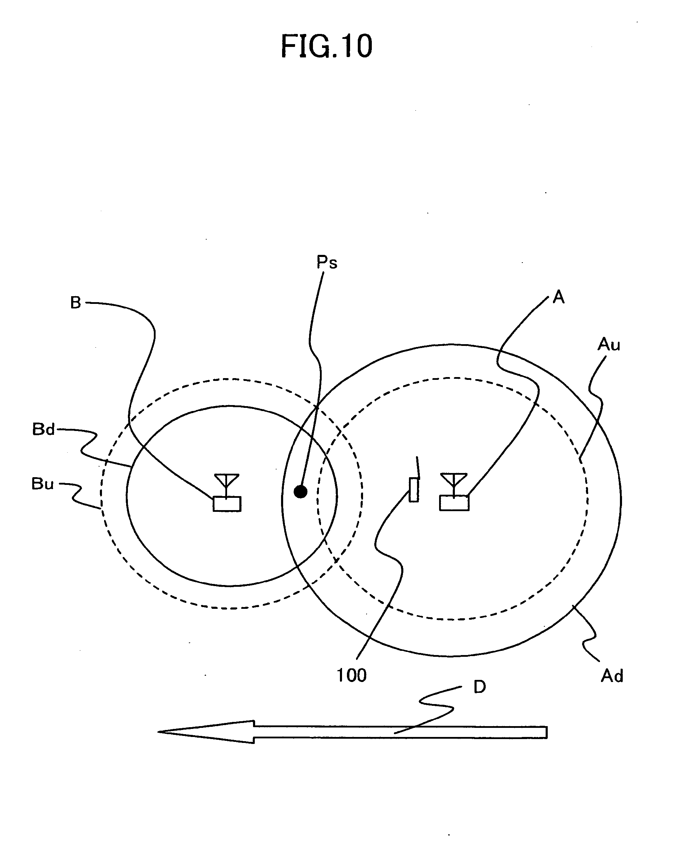

However, a region in which download signals from the base station reaches the mobile station may sometimes be greatly different from a region in which upload signals from mobile station reaches the base station. Therefore, in the above conventional technology, a position in which the handover process is executed may sometimes be a position in which the upload signals can not reach the base station as the active set cell. For example, as illustrated in Fig. 10, it is assumed that a region "Ad" in which download signals from a base station "A" as an active set cell can reach the mobile station 100 is wider than a region "Au" in which upload signals can be transmitted from the mobile station 100 to the base station A, and a region "Bd" in which download signals from a base station "B" as a monitor set cell can reach the mobile station 100 is narrower than a region "Bu" in which upload signals can be transmitted from the mobile station 100 to the base station B. In this case, as illustrated in Fig. 10, a position "Ps" (position where the handover process is executed) in which the download signals transmitted to the mobile station 100 from the base station A and B balance each other, may sometimes be a position (position outside the region Au) in which the upload signals can not reach the base station A as the active set cell. In addition, the mobile station 100 must transmit/receive information to/from the base station as the active set cell in order to perform the handover process.

In other words, the mobile station 100 can not transmit the information to the base station A so that it fails in the handover process when the handover process is executed, and communication quality may sometimes be deteriorated.

Therefore, the present invention has been made in order to provide a mobile station that executes the handover process without fail and improves the communication quality, even if the region in which upload signals can reach the base station in the communication mode is different from the region in which download signals can be received from the base station in the communication mode.

DISCLOSURE OF THE INVENTION

The present invention is related to a mobile station including: a first measuring means for measuring received power strength and propagation loss of signals transmitted from a communicating first base station; a second measuring means for measuring received power strength and propagation loss of signals transmitted from a second base station neighboring the first base station; a first derivation means for deriving the difference between the received power strengths from the first and second base stations, as measured by the first and second measuring means; a second derivation means for deriving the difference between the propagation losses from the first and second base stations, as measured by the first and second measuring means; a comparing means for comparing the values derived by the first and second derivation means; and a transmitting means for transmitting, based on the comparison result by the comparing means, a handover signal to the first base station.

Thereby, the present invention can provide a mobile station that certainly executes a handover process and improves the communication quality, even if a region in which upload signals can be transmitted to the base station in the communication mode, is different from a region in which download signals can be received from the base station in the communication mode.

BRIEF DESCRIPTION OF DRAWINGS

Fig. 1    is a diagram illustrating a mobile station according to Embodiment 1 of the invention;
Fig. 2    is a flow chart illustrating the operation of the mobile station according to Embodiment 1 of the invention;
Fig. 3    is a diagram for explaining the operation of the mobile station according to Embodiment 1 of the invention;
Fig. 4    is a sequence diagram illustrating a handover process between the mobile station and base stations;
Fig. 5    is a diagram for explaining the operation of the mobile station according to Embodiment 1 of the invention;

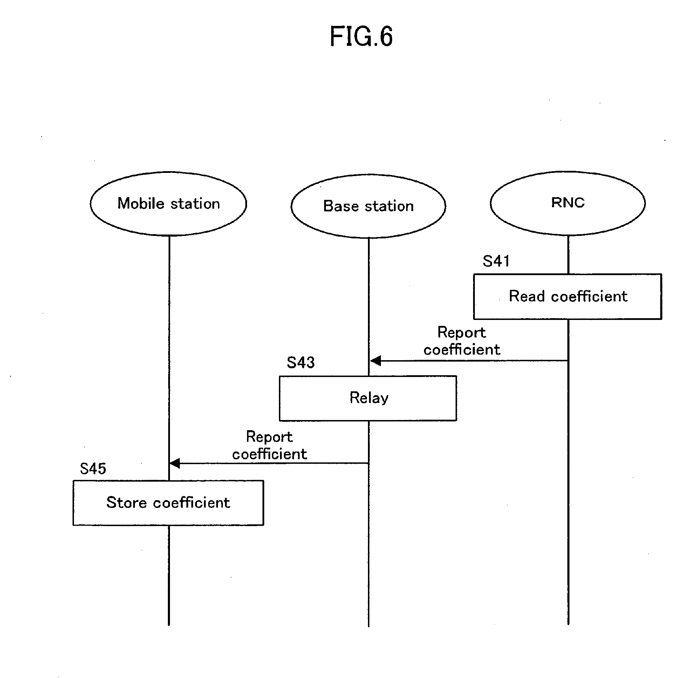

Fig. 6    is a sequence diagram illustrating a communications system according to Embodiment 2 of the invention;
Fig. 7    is a diagram illustrating a mobile station according to a conventional technology;

Fig. 8     is a diagram for explaining a judgment formula used in the conventional technology;

Fig. 9     is a flow chart illustrating the operation of the mobile station according to the conventional technology; and

Fig. 10    is a diagram for explaining the operation of the mobile station according to the conventional technology.

BEST MODE FOR CARRYING OUT THE INVENTION

Embodiment 1

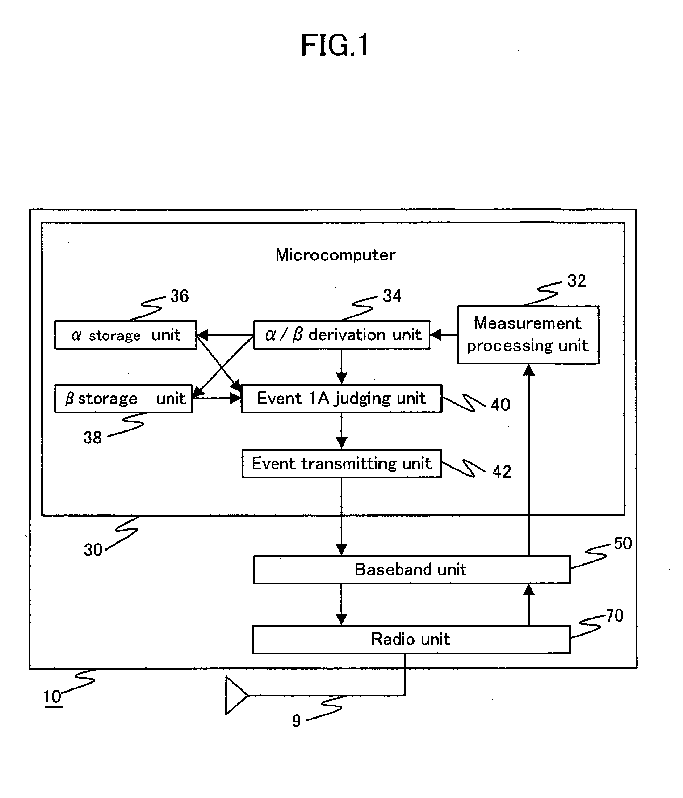

A configuration and operations of a mobile station related to Embodiment 1 will be explained according to Fig. 1 through Fig. 5.

A mobile station "10" transmits signals processed by a microcomputer "30" to any of base stations through a baseband unit "50", a radio unit "70", and an antenna "90". Moreover, the mobile station receives signals on a "PCIPCH" (primary common pilot channel) from neighboring base stations (Whether the communication mode is "active set cell" or "monitor set cell" doesn't matter.) specified by the communicating base station. The received signals are inputted into the microcomputer 30 through the antenna 90, the radio unit 70, and the baseband unit 50. The microcomputer 30 includes: a measurement processing unit (first measuring means and second measuring means) "32" for periodically measuring received power strength from the each of the base stations according to input signals; a $\alpha/\beta$ derivation unit (first derivation means and second derivation means) "34" for calculating the following formulas (1) and (2) based on a measurement result by the measurement processing unit 32 and deriving $\alpha$ and $\beta$ values; an $\alpha$ storage unit "36" and a $\beta$ storage unit "38" for storing each of derived values by the $\alpha/\beta$ derivation unit 34; an event 1A judging unit (comparing means) "40" for judging whether the following formula (3) is satisfied or not by using the $\alpha$ value stored in the storage unit 36 and the $\beta$ value stored in the storage unit 38; and an event transmitting unit (transmitting means) "42" for transmitting, a signal (measurement report) for reporting an event occurrence to the base station as the active set cell through the baseband unit 50, the radio unit 70, and the antenna 90, based on the judgment by the event 1A judging unit.

In addition, the received power strength measured by the measurement processing unit 32 may be calculated using either "RSCP" (received signal code power) from any of the base stations, a ratio (power ratio of received signal code "Ec/No") of the received power strength from any of the base stations to the received power strength from another base station, or electrical field intensity of the received signals.

$$\alpha = \ (-1) \ \text{x} \ (10 \ \text{x} \ \text{LogMNew} + \text{CIONew} - (W \ \text{x} \ 10 \ \text{x} \ \text{Log}(1/\Sigma(1/Mi))$$
$$+ \ (1 - W) \ \text{x} \ 10 \ \text{x} \ \text{LogMbest} + (R1a - H1a/2)) \qquad \ldots \text{Formula (1)}$$

$$\beta = \ 10 \ \text{x} \ \text{LogMNew} + \text{CIONew} - (W \ \text{x} \ 10 \ \text{x} \ \text{Log}(\Sigma Mi)$$
$$+ \ (1 - W) \ \text{x} \ 10 \ \text{x} \ \text{LogMbest} \ (R1a \ - H1a/2)) \qquad \ldots \text{Formula (2)}.$$

In the above formulas, although each of symbols means the same content as described in Section 14.1.2.1 of the 3GPP specification TS25.331V3.11.0 (2002-06), meanings of the symbols will be explained below according to the configuration of the mobile station 10.

"MNew" is a value measured by the measurement processing unit 32 of a predefined base station (a second base station neighboring a first base station) as a monitor set cell, and the value means a propagation loss of signals transmitted from the base station as the monitor set cell in Formula (1), and a measurement result of received power strength of the signals transmitted from the base station as the monitor set cell in Formula (2). "CIONew" is a correction value of the "MNew", and is reported from the base stations. "Mi" is a value measured by the measurement processing unit 32 of another base station (the communicating first base station) as an active set cell, and the value means a propagation loss of signals transmitted from the base station as the active set cell in Formula (1), and received power strength of the signals transmitted from the base station as the active set cell in Formula (2).

Moreover, if a plurality of base stations exists, as the active set cell of the mobile station 10, "MBest" means a propagation loss of the base station having the lowest propagation loss in Formula (1), and the "MBest" means received power strength from the base station having the highest received power strength in Formula (2).

"R1a" is a reporting range for defining occurrence conditions of a state (referred to as the event 1A in the 3GPP) in which a base station needs to be added as the active set cell, and "H1a" is a hysteresis value (value stored in the mobile station 10 to correct the reporting range R1a) of the event 1A.

"W" is a value transmitted from the base stations to the mobile station, and any of values (0.0 through 2.0) is assigned to the W.

Accordingly, when the broad propagation loss to the active set cell (W x10 x Log(1/Σ(1/Mi)) + (1 - W) x 10 x LogMbest + (R1a - H1a/2)) is compared with the broad propagation loss to the monitor set cell (10 x LogMNew + CIONew), in Formula (1), the W affects the value of the broad propagation loss from the active set cell.

Moreover, when the broad received power strength from the monitor set cell (10 x LogMNew + CIONew) is compared with the broad received power strength from the active set cell (W x 10 x Log(ΣMi) + (1 - W) x 10 x LogMbest - (R1a - H1a/2)), in Formula (2), the W affects the broad received power strength from the active set cell. Moreover, the event 1A judging unit 40 judges an occurrence of the event 1A by calculating following Formula (3) based on propagation loss difference "α" and received power difference "β" derived by the α/β deriving unit 34.

$$\alpha + \beta \geq 0 \qquad \ldots \text{Formula (3)} .$$

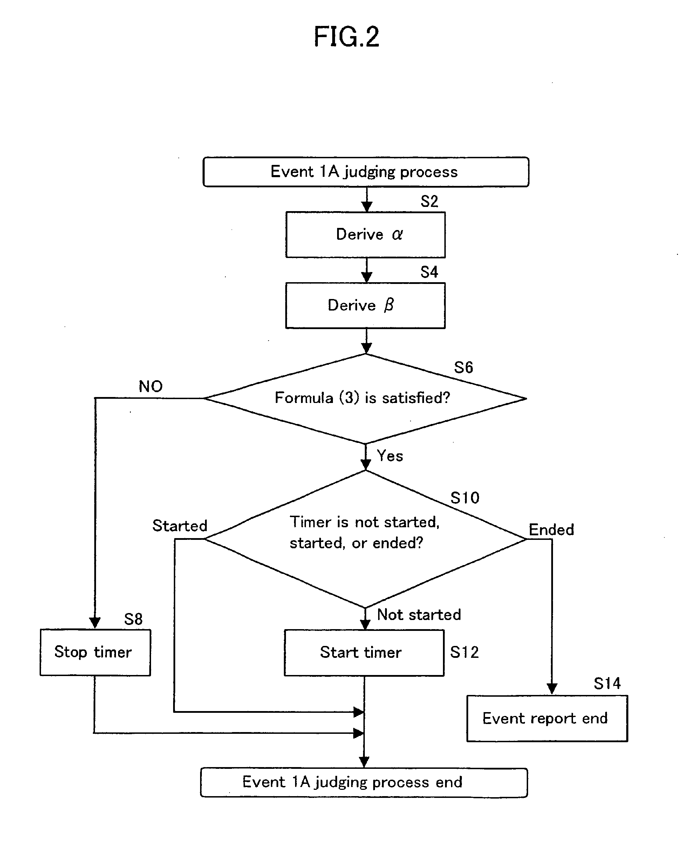

Next, the operations of the mobile station 10 will be explained according to Fig. 2 through Fig. 5.

In the mobile station 10 an event 1A judging program is periodically executed. When the event 1A judging program is executed, the α value is firstly derived in the microcomputer 30 (first derivation means), and the α value is stored into the α storage unit 36 (S2). The microcomputer 30 calculates the β value after the α value has been derived (second derivation means), and the β value is stored into the β storage unit 38 (S4). The microcomputer 30 reads the α and β values from the α storage unit 36 and the β storage unit 38, respectively after the β value has been derived, and executes a judging process by Formula (3) (S6) (comparing means). By this judging process, step S8 ensues when "α+β" is smaller than 0, or step S10 ensues when the α+β is greater than 0.

In step S8, a timer in the event 1A judging unit 40 is stopped when the timer is in operation, or remains stopped when the timer is already stopped. Here, the timer is used in order to count the time that is referred to as a "time-to-trigger" and defined in the 3GGP standard, and the timer is used in order not to report to the base station unnecessary information on the occurrence of the event 1A, even if the mobile station 10 judges that the event 1A has occurred, if the judgment is made instantaneously. In step S10, the microcomputer 30 judges whether the time-to-trigger period has terminated or not. As the result of the judgment, when the timer is not yet started, the timer is started and the event 1A process is terminated (S12), meanwhile, when the timer is already started and the time-to-trigger period has elapsed, the microcomputer 30 reports an occurrence of the event 1A to the base station and then terminates the event 1A process (S 14). Moreover, when the timer is already started but the time-to-trigger period has not yet elapsed, the microcomputer 30 terminates the event 1A judging process without doing anything.

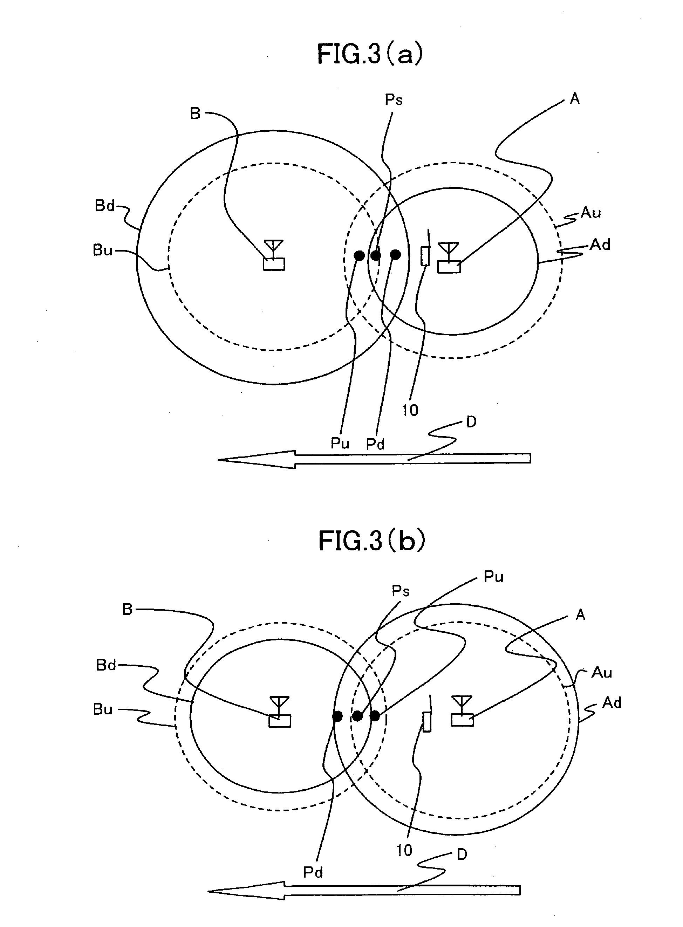

Next, operations of the mobile station 10 in motion will be explained according to Fig. 3 through Fig. 5. In Fig. 3, a base station "A" is an active set cell, a base station "B" is a monitor set cell, and the mobile station 10 moves in a direction "D" from a location near the base station A toward near the base station B.

In Fig. 3 (a), a region "Ad" in which download signals can be transmitted from the base station A to the mobile station 10, is narrower than a region "Au" in which upload signals can be transmitted from the mobile station 10 to the base station A. Moreover, a region "Bd" in which download signals can be transmitted from the base station B to the mobile station 10, is wider than a region "Bu" in which upload signals can be transmitted from the mobile station 10 to the base station B.

In this case, an upload-balance location "Pu" at which power levels of the upload signals transmitted from the mobile station 10 and received by the base stations A and B are balanced each other, may sometimes occur after a download-balance location "Pd" at which power levels of the download signals transmitted from base stations A and B and received by the mobile station 10 are balanced each other, has occurred. Therefore, if a handover process is performed according to only the upload-balance location, when handover process is performed, their may be a risk in that the position of the mobile station comes outside region in which the download signals can not be received from the communicating base stations A.

However, the mobile station 10 detects an occurrence of the event 1A at a halfway location between the upload-balance location Pu and the download-balance location Pd, and performs the handover process. Therefore, a possibility increases in which the handover process is performed at a location where the download signals can be received from the communicating base station A.

On the other hand, in Fig. 3 (b), the region Ad in which the download signals can be transmitted from the base station A to the mobile station 10 is wider than the region Au in which the upload signals can be transmitted from the mobile station 10 to the base station A. Moreover, the region Bd in which the download signals can be transmitted from the base station B to the mobile station 10 is narrower than the region Bu in which the upload signals can be transmitted from the mobile station 10 to the base station B. In cases such as this, the download-balance location Pd may sometimes occur after the upload-balance location has occurred.

However, because the mobile station 10 detects an occurrence of the event 1A at a halfway location between the upload-balance location Pu and the download-balance location Pd, and performs the handover process, a possibility increases in which the handover process is performed at a location where the download signals can be received from the communicating base station A.

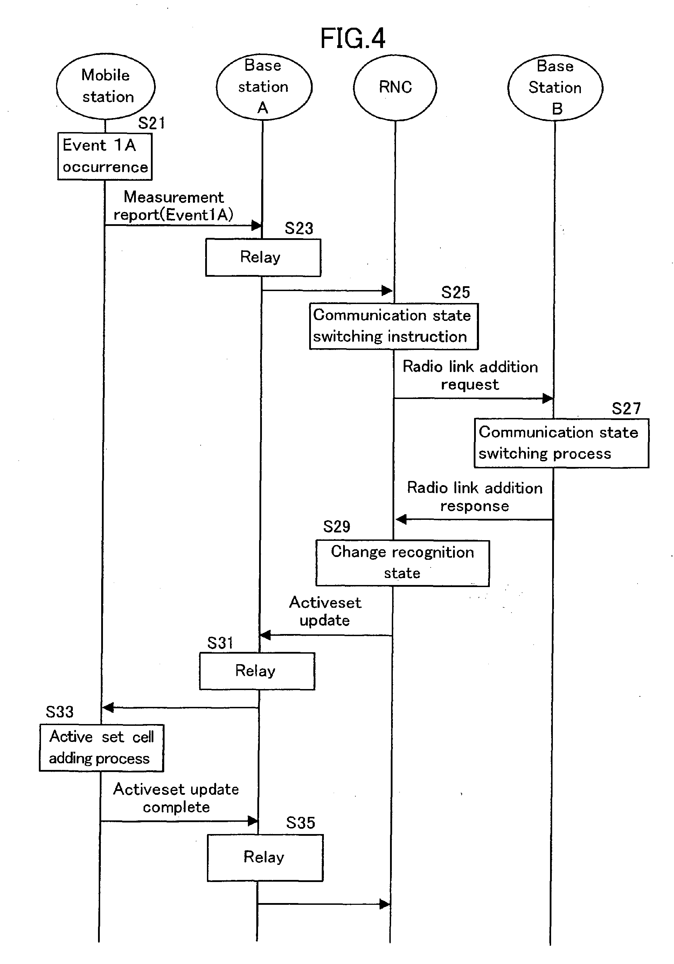

Moreover, when the mobile station 10 judges an occurrence of the event 1A, operations of transmitting and receiving information will be explained below according to Fig. 4, which are performed among the mobile station 10, the base station as the active set cell (base station A in Fig. 3), the base station as the monitor set cell (base station B in Fig. 3), and a "RNC" (radio network control, master computer) for controlling each of the base stations.

When the mobile station 10 has judged the occurrence of the event 1A (judged that the base station B illustrated in Fig. 3 is added to the active set cell) (S21), the mobile station 10 reports a signal, as a "measurement-report" (handover signal, handover request signal) by which the base station B is changed into the active set cell, to the RNC through a relaying means of the base station A (S23) (transmitting means). The RNC that has received the signal from the mobile station 10 transmits an instruction signal, as a "radio-link-addition request" (handover request signal), to the base station B through an instructing means in the RNC, in order to change the communication mode with the mobile station 10 into the active set cell (S25). The base station B that has received the signal changes the communication mode with the mobile station 10 from the monitor set cell into the active set cell by a switching means (not illustrated) in the mobile station 10 (second switching means), and transmits to the RNC (S27) a response signal, a "radio-link-addition-response", that means completion of the change. The RNC that has received the response signal through a receiving means (not illustrated) in the RNC changes a setting state of the RNC into another state in which the base station B is controlled as the active set cell of the mobile station 10 (S29). Moreover, at the same time as this change, the RNC reports an "active-set-update" signal (handover instruction signal), which means that the base station B is changed into an active set cell of the mobile station 10, to the mobile station 10 through the relaying means of the base station A (S31). The mobile station 10 receives this notification by a receiving means in the mobile station 10, changes the base station B as a monitor set cell into the base station as an active set cell by a switching means (not illustrated) in mobile station 10 (first switching means), and reports an "active-set-update-complete" signal that means setting completion, to the RNC through the base station A (S35).

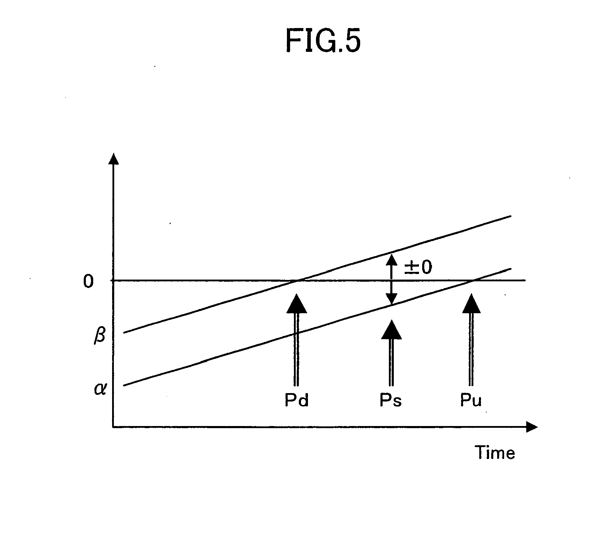

Next, operations of detecting an occurrence of the event 1A at a location "Ps" will be explained according to Fig. 5, where the location Ps is halfway between the location Pd at which received power levels of download signals transmitted from the base stations A and B to the mobile station 10 are balanced each other, and the location Pu at which received power levels of upload signals transmitted from the mobile station 10 to the base stations A and B are balanced each other.

In Formula (1), the $\alpha$ means the difference between the propagation loss to the base station A and the propagation loss to the base station B (the difference between the propagation loss to the first base station and the propagation loss to the second base station). Moreover, a formula for calculating the difference between the propagation loss to the base station A and the propagation loss to the base station B is not limited to Formula (1), but it may be a formula capable of comparing the propagation loss to the communicating base station A with the propagation loss to the neighboring base station B.

Moreover, a propagation loss that rises during the time signals transmitted from the base station reaches the mobile station is equivalent to a propagation loss that occurs during the time signals transmitted from the mobile station reaches the base station. Therefore, the mobile station can judge, based on the propagation losses, whether upload signals transmitted from the mobile station reaches the base station or not. In other words, the fact that the propagation losses to the base stations A and B are equivalent each other ($\alpha = 0$) means each received power strength of upload signals received by the base stations A and B is roughly equivalent.

Meanwhile, in Formula (2), the $\beta$ means the difference between the received power strength from the base station A and the received power strength from the base station B (the difference between the received power strength from the first base station and the received power strength from the second base station). Moreover, a formula for calculating the difference between the received power strength from the base station A and the received power strength from the base station B is not limited to Formula (2), but it may be a formula capable of comparing the received power strength from the communicating base station A with the received power strength from the neighboring base station B.

Moreover, the mobile station can judge, based on the received power strength, whether download signals transmitted from the base station reaches the mobile station or not. In other words, the fact that each received power strength from the base stations A and B is equivalent ($\beta = 0$) means each received power strength of the download signals transmitted from the base stations A and B and received by the mobile station is roughly equivalent.

Fig. 5 illustrates movements of the value $\alpha$ and the value $\beta$ when the mobile station is moving in the direction D illustrated in Fig. 3. In Fig. 5, both value $\alpha$ and value $\beta$ trend upward. Moreover, if the time when the value $\alpha$ is 0 is different from the time when the value $\beta$ is 0, one of the value $\alpha$ and the value $\beta$ is positive and the other is negative. Therefore, as illustrated in Fig. 5, there exists a time period where Formula (3) is satisfied after the value $\beta$ is firstly varied to a positive value, until the value $\alpha$ is varied to 0 next.

In other words, when Formula (3) is satisfied, the mobile station 10 is on the midway between a location at which the value β is varied to 0, and another location at which the value α is varied to 0. In other words, the mobile station 10 can detects an occurrence of the event 1A and performs the handover process on the midway between a location at which the propagation losses to the base stations A and B are balanced each other, and another location at which received power strengths from the base stations A and B are balanced each other.

Therefore, a possibility for the mobile station 10 to perform the handover is higher at the location at which the download signals can be received from the base station A than at a location at which the upload signals to the base stations A and B are balanced each other.

Moreover, a possibility for the mobile station 10 to perform the handover is higher at a location at which the upload signals can be transmitted to the base station A than at a location at which the download signals from the base stations A and B are balanced each other.

As described above, the mobile station 10 according to Embodiment 1 can perform the handover process without fail and provide a mobile station that has improved communication quality, even if a region in which upload signals can reach a base station as an communicating active set cell is different from another region in which download signals can be received from the base station as the communicating active set cell.

Moreover, a communications system according to Embodiment 1 can perform the handover process without fail and improve communication quality, even if a region in which upload signals can reach a base station as the communicating active set cell, is different from another region in which download signals can be received from the base station as the communicating active set cell.

Embodiment 2

Although the value α is simply added to the value β in Formula (3) in Embodiment 1, the event 1A judging unit 40 in the mobile station 10 in Embodiment 2 performs following Formula (4), in which the value α and the value β each are multiplied by coefficients (correction values). By calculating Formula (4) as described above, judgment by Formula (3) is corrected, enabling a judgment result to be more appropriate.

$$c\alpha + d\beta \geq 0 \qquad\qquad \ldots \text{Formula (4)}.$$

Moreover, if a storage device for storing the coefficients "c" and "d" is added to the mobile station 10 and the event 1A judging unit 40 judges Formula (4) by reading predefined coefficients "c" and "d" from the storage device, more appropriate correction can be performed, because the correction values can be varied based on a specific condition.

Embodiment 3

In Embodiment 3, a communications system as recited in Embodiment 1 further includes: a storage device (not illustrated) for storing a plurality of coefficients "c" and "d" illustrated in Formula (4), and a transmitting means for transmitting signals to report to the base station A (first base station) the relevant coefficients "c" and "d" read from the storage device, in the RNC; a relaying means (not illustrated), added to the base station A, for relaying to the mobile station the information signals; and a receiving means, added to the mobile station, for receiving the signals form the base station A.

In a communications system as described above, relevant coefficients "c" and "d" read from the storage device are transmitted from an RNC to a base station A (S41), information signals are relayed from the base station A to a mobile station (S43), the information signals are received and stored in the mobile station, and the coefficients "c" and "d" can be used for a judgment using Formula (4).

Embodiment 4

In Embodiment 1, although a handover signal transmitted from the mobile station 10 to the communicating base station is a signal (for example, an event 1A occurrence signal in the 3GGP standard) for adding a base station as a monitor set cell to base stations as active set cells, the mobile station 10 may transmit a signal (for example, an event 1B occurrence signal in the 3GGP standard) for changing a base station as an active set cell into a base station as a monitor set cell, or a signal (for example, an event 1C occurrence signal in the 3GGP standard) for exchanging the mode of the first base station as a monitor set cell for that of the second base station as an active set cell. In other words, the mobile station 10 may transmit a signal for performing the handover process based on received power strength and propagation losses of a communicating base station and a base station neighboring the communicating base station.

A communication system configured as described above can provide a mobile station that executes the handover process without fail so as to improve communication quality, even if a region in which upload signals can reach the communicating base station is different from another region in which download signals can be received from the communicating base station.

**Claims**

1. A mobile station, comprising:

   a first measuring means for measuring received power strength and propagation loss of signals transmitted from a communicating first base station;
   a second measuring means for measuring received power strength and propagation loss of signals transmitted from a second base station neighboring the first base station;
   a first derivation means for deriving the difference between the received power strengths from the first and second base stations, as measured by the first and second measuring means;
   a second derivation means for deriving the difference between the propagation losses from the first and second base stations, as measured by the first and second measuring means;
   a comparing means for comparing the values derived by the first and second derivation means; and
   a transmitting means for transmitting, based on the comparison result by the comparing means, a handover signal to the first base station.

2. A mobile station as recited in claim 1,
   wherein the comparing means adds a correction value to the result derived by the first derivation means or the second derivation means and outputs a comparison result.

3. A mobile station as recited in claim 2,
   further comprising a storage device for memorizing a plurality of correction values, wherein the comparing means outputs a comparison result corrected using any one of the correction values memorized in the storage device.

4. A mobile station as recited in claim 2,
   further comprising a receiving means for receiving a signal representing an arbitrary coefficient from a communicating base station, wherein the comparing means outputs a comparison result corrected using the received coefficient.

5. A communication system, comprising:

   a mobile station;
   a first base station communicating with the mobile station;
   a second base station neighboring the first base station; and
   a master computer for controlling communication with the first base station and the second base station; wherein the mobile station includes:

      a first measuring means for receiving and measuring received power strength and propagation loss of signals transmitted from the first base station;
      a second measuring means for receiving and measuring received power strength and propagation loss of signals transmitted from the second base station;
      a first derivation means for deriving the difference between the received power strengths from the first and second base stations, as measured by the first and second measuring means;
      a second derivation means for deriving the difference between the propagation losses from the first and second base stations, as measured by the first and second measuring means;
      a comparing means for comparing the values derived by the first and second derivation means;
      a transmitting means for transmitting, based on the comparison result by the comparing means, to the first base station a handover request signal for switching a communications channel to the second base station; and
      a first switching means for establishing, based on a handover instruction signal received from the first base station, the communications channel with the second base station;

   the first base station includes a relaying means for relaying the handover request signal from the mobile station to the master computer, and for relaying the handover instruction signal from the master computer to the mobile station;

the master computer includes a transmitting means for transmitting, based on the handover request signal received from the mobile station, the handover instruction signal to the first and second base stations; and

the second base station includes a second switching means for establishing, based on the handover instruction signal received from the master computer, the communications channel with the mobile station.

6. A communication system as recited in claim 5,
   wherein the master computer further includes;

   a storage means for memorizing a plurality of coefficients; and

   a transmitting means for transmitting, to the first base station, a signal representing a predefined coefficient read out from the storage means; wherein

   the first base station relays to the mobile station the signal representing the predefined coefficient transmitted from the master computer; and

   the comparing means of the mobile station outputs a comparison result corrected using the predefined coefficient received from the first base station.

# FIG.1

Microcomputer

α storage unit — 36

α / β derivation unit — 34

Measurement processing unit — 32

β storage unit — 38

Event 1A judging unit — 40

Event transmitting unit — 42

30

Baseband unit — 50

Radio unit — 70

10

9

# FIG.2

```
┌─────────────────────────────────────────┐
│         Event 1A judging process         │
└─────────────────────────────────────────┘
                     │  S2
                     ▼
          ┌─────────────────────┐
          │      Derive α        │
          └─────────────────────┘
                     │  S4
                     ▼
          ┌─────────────────────┐
          │      Derive β        │
          └─────────────────────┘
                     │
                     ▼        S6
  NO    ◇─────────────────────────────◇
 ◄──────│   Formula (3) is satisfied?  │
        ◇─────────────────────────────◇
                     │ Yes
                     ▼               S10
  Started  ◇───────────────────────────────◇  Ended
 ◄─────────│  Timer is not started,          │────►
           │  started, or ended?             │
           ◇───────────────────────────────◇
                     │ Not started
   S8                ▼
┌────────────┐  ┌─────────────────┐            S14
│ Stop timer │  │   Start timer    │ S12   ┌──────────────────┐
└────────────┘  └─────────────────┘        │ Event report end  │
                                           └──────────────────┘
                     ▼
┌─────────────────────────────────────────┐
│       Event 1A judging process end        │
└─────────────────────────────────────────┘
```

## FIG.3 (a)

## FIG.3 (b)

# FIG.4

```
Mobile          Base                      Base
station         station      RNC          Station
                  A                          B
```

S21
Event 1A
occurrence

Measurement
report(Event1A)

S23
Relay

S25
Communication state
switching instruction

Radio link addition
request

S27
Communication state
switching process

Radio link addition
response

S29
Change recognition
state

Activeset
update

S31
Relay

S33
Active set cell
adding process

Activeset update
complete

S35
Relay

# FIG.5

# FIG.6

Mobile station

Base station

RNC

S41

Read coefficient

Report
coefficient

S43

Relay

Report
coefficient

S45

Store coefficient

# FIG.7

# FIG.8

# FIG.9

Event 1A judging process

S101
Formula (10) is satisfied?

N

Y

S103
Predefined time is elapsed?

N

Y

S105
Event report end

Event 1A judging process end

# FIG.10

## INTERNATIONAL SEARCH REPORT

| International application No. |
|---|
| PCT/JP03/10995 |

**A. CLASSIFICATION OF SUBJECT MATTER**
Int.Cl$^7$ H04Q7/22

According to International Patent Classification (IPC) or to both national classification and IPC

**B. FIELDS SEARCHED**

Minimum documentation searched (classification system followed by classification symbols)
Int.Cl$^7$ H04B7/26, H04Q7/00-7/38

Documentation searched other than minimum documentation to the extent that such documents are included in the fields searched
Jitsuyo Shinan Koho 1922-1996 Toroku Jitsuyo Shinan Koho 1994-2003
Kokai Jitsuyo Shinan Koho 1971-2003 Jitsuyo Shinan Toroku Koho 1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-54153 A (NTT Docomo Inc.),<br>23 February, 2001 (23.02.01),<br>Full text; all drawings<br>(Family: none) | 1<br>2-6 |
| Y | JP 11-122654 A (NEC Corp.),<br>30 April, 1999 (30.04.99),<br>Full text; all drawings<br>& EP 0897251 A2 & CA 2238791 A<br>& US 6400953 A | 2-6 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 December, 2003 (02.12.03) | 16 December, 2003 (16.12.03) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

International application No.

PCT/JP03/10995

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-534023 A   (Telefonaktiebolaget LM Ericsson(publ)), 08 October, 2002 (08.10.02), Full text; all drawings & WO 00/38457 A1      & AU 200030404 A & EP 1142408 A1      & KR 2001082361 A & CN 1330850 A | 2-6 |
| A | JP 7-298335 A   (NTT Mobile Communications Network Inc.), 10 November, 1995 (10.11.95), Abstract (Family: none) | 1-6 |
| A | JP 2003-510862 A   (Motorola, Inc.), 18 March, 2003 (18.03.03), Abstract; Claims 1, 6, 7 & WO 01/18991 A1      & AU 200079831 A & KR 2002029785 A      & KR 2002030807 A & BR 200013604 A      & CN 1385005 A | 1-6 |

Form PCT/ISA/210 (continuation of second sheet) (July 1998)